# EUROPÄISCHE PATENTANMELDUNG

(11) **EP 2 136 114 A1**
(43) Veröffentlichungstag der Anmeldung: **23.12.2009**
(21) Anmeldenummer: 09100338.4
(22) Anmeldetag: 16.06.2009
(51) Int. Cl.: F16J 15/52, F02D 9/10, F16K 1/226

(54) **Wellenabdichtung für Klappenwellen für Ventilklappen von Ventilklappenstutzen**

(30) Priorität: 20.06.2008 DE 102008029363
(71) Anmelder: Continental Automotive GmbH, 30165 Hannover (DE)
(72) Erfinder: Anschicks, Rolf, 35510 Butzbach (DE); Hannewald, Thomas, 64347 Griesheim (DE); Köhler, Stefan, 60437 Frankfurt (DE); Welteroth, Peter, 61479 Schlossborn (DE)

(57) **Zusammenfassung**

Die Wellenabdichtung besteht aus einem zwischen der jeweiligen Klappenwelle (2) und dem Ventilklappengehäuse (5) angeordneten Wälzlager (1) und einem zwischen dem Wälzlager (1) und dem inneren Kanal K des Ventilklappenstutzens zwischen der jeweiligen Klappenwelle (2) und dem Ventilklappengehäuse (5) angeordneten Dichtelement (3a, 3b).

Gegenstand der Erfindung ist ferner die Verwendung der Wellenabdichtung als Wellenabdichtung für Ventilklappenwellen für Abgasrückführventile für Kraftfahrzeuge.

## Beschreibung

Die Erfindung bezieht sich auf eine Wellenabdichtung für Klappenwellen für Ventilklappen von Ventilklappenstutzen. Die Erfindung bezieht sich ferner auf eine Verwendung der Wellenabdichtung.

Wellenabdichtungen für Klappenwellen für Ventilklappen von Ventilklappenstutzen sind bekannt. Im Prospekt der Firma Schaeffler KG "Wälzlager für Drosselklappen", August 2006, werden Wellenabdichtungen für Drosselklappenstutzen beschrieben. Als Wellenabdichtung kommt dabei ein Wälzlager zum Einsatz, in welchem beidseitig Lippendichtungen aus einem Elastomer angeordnet sind. Bei Ventilklappenstutzen, die beispielsweise mit Abgasen beaufschlagt werden, ist es oftmals nachteilig, dass diese Abgase größere Mengen an Wasserdampf mit sich führen, die sich im Inneren des Ventilklappenstutzens als Kondensat abscheiden. Die dabei gebildeten Kondensate werden vom als Wellenabdichtung angeordneten Wälzlager nicht vollständig zurückgehalten und gelangen über das Wälzlager in benachbarte Regionen, wo sie Schädigungen, beispielsweise an elektronischen Bauteilen, in Folge von Korrosion verursachen. Dies ist besonders dann nachteilig, wenn die elektronischen Bauteile direkt am Deckel des Ventilklappenstutzens angeordnet sind. Darüber hinaus lassen sich in solchen Fällen Schädigungen durch Korrosion am Elektromotor, der dem Antrieb der Klappenwelle dient, nicht vermeiden, so dass der Betrieb des Ventilklappenstutzens in größerem Umfang gefährdet ist.

Der Erfindung liegt daher die Aufgabe zugrunde, eine Wellenabdichtung für Klappenwellen für Ventilklappen von Ventilklappenstutzen zu schaffen, mit welcher es möglich ist, Kondensate entsprechend zurückzuhalten, so dass die oben genannten Schädigungen vermieden werden. Der Erfindung liegt ferner die Aufgabe zugrunde, eine Verwendung der Wellenabdichtung zu schaffen.

Die der Erfindung zugrunde liegende Aufgabe wird durch eine Wellenabdichtung für Klappenwellen für Ventilklappen von Ventilklappenstutzen gelöst, die aus einem zwischen der jeweiligen Klappenwelle und dem Ventilklappengehäuse angeordneten Wälzlager und einem zwischen dem Wälzlager und dem inneren Kanal K des Ventilklappenstutzens zwischen der jeweiligen Klappenwelle und dem Ventilklappengehäuse angeordneten Dichtelement besteht. Als Klappenwellen und Ventilklappen kommen beispielsweise Drosselklappenwellen und Drosselklappen zum Einsatz. Als Wälzlager können handelsübliche Wälzlager mit beidseitigen Dichtungen, wie beispielsweise Lippendichtungen, eingesetzt werden, die man auch als Nadelhülsen bezeichnet. Als Dichtelement kann beispielsweise eine zusätzliche Lippendichtung dienen. Diese weist in der Regel einen nahezu U-förmigen Querschnitt auf. Es hat sich in überraschender Weise gezeigt, dass es durch den Einsatz einer aus einem Wälzlager und einem Dichtelement in entsprechender Anordnung bestehenden Wellenabdichtung möglich ist, die aus dem Drosselklappenstutzen zur Klappenwelle gelangenden Kondensate wirkungsvoll zurückzuhalten, so dass Schädigungen auf der dem inneren Kanal K abgewandten Seite der Wellenabdichtung wirkungsvoll vermieden werden. Dabei ist besonders vorteilhaft, dass auch keine geringen Mengen an Kondensat zu den benachbart angeordneten elektronischen Bauteilen gelangen können und dort zu Schädigungen an den elektronischen Bauteilen oder am Elektromotor führen können.

Eine bevorzugte Ausgestaltung der Erfindung besteht darin, dass das Dichtelement direkt am Wälzlager anliegend angeordnet ist. Auf diese Weise baut die Wellenabdichtung kompakt und lässt sich auf relativ einfache Weise am Ventilklappengehäuse positionieren.

Gemäß einer weiteren bevorzugten Ausgestaltung der Erfindung ist als Dichtelement eine Manschettendichtung angeordnet, die mit der einen Kante in eine erste Nut des Ventilklappengehäuses und mit der anderen Kante in eine zweite Nut der Klappenwelle eingreift. Dabei ist besonders vorteilhaft, dass die Manschettendichtung mit einer relativ hohen Anpresskraft an der Klappenwelle anliegt und dort eine besonders hohe Dichtwirkung erzielt werden kann.

Eine weitere bevorzugte Ausgestaltung der Erfindung sieht vor, dass im Bereich zwischen dem Wälzlager und dem Dichtelement ein Ende eines Austrittskanals angeordnet ist, der durch das Ventilklappengehäuse zur Umgebung hin verläuft. Dieser Austrittskanal kann je nach Kundenwunsch gegebenenfalls mit Einbauten versehen sein. Dabei ist vorteilhaft, dass größere Wassermassen, die je nach Prozessbedingung gegebenenfalls schubweise auf die Wellenabdichtung einwirken, hinter dem Dichtelement seitlich über den Austrittskanal abgeführt und zur Umgebung geleitet werden können.

Gemäß einer weiteren Ausgestaltung der Erfindung ist das Ende des Austrittskanals sowohl direkt am Wälzlager als auch direkt am Dichtelement positioniert. Durch diese Maßnahme baut die Wellenabdichtung relativ kompakt, wobei gleichzeitig die Möglichkeit der Abfuhr von Kondensat über den Austrittskanal problemlos realisiert werden kann.

Gegenstand der Erfindung ist schließlich die Verwendung der Wellenabdichtung als Wellenabdichtung für Ventilklappenwellen für Abgasrückführventile für Kraftfahrzeuge. Gerade in der Entwicklung der Technik bei Abgasrückführventilen werden derzeit immer größere Rückführmengen an Abgas vorgesehen, die dann einen relativ hohen Wassergehalt in Dampfform aufweisen. Eine entsprechende Kondensation dieses Wasserdampfes des Abgasrückführventils ist im Prozess dabei unvermeidbar. Durch die Anordnung der Wellenabdichtung wird bei Abgasrückführventilen besonders vorteilhaft ein Eindringen von Kondensat in diejenigen Räume vermieden, die benachbart elektronische Bauelemente aufweisen, die durch Wasser korrodieren könnten.

Die Erfindung wird nachfolgend anhand der Zeichnung (Fig. 1 bis Fig. 3) näher und beispielhaft erläutert.
- Fig. 1: zeigt die Wellenabdichtung mit Wälzlager und Dichtelement im Längsschnitt.
- Fig. 2: zeigt eine alternative Ausgestaltung der Wellenabdichtung im Längsschnitt mit Wälzlager und einer als Dichtelement angeordneten Manschettendichtung.
- Fig. 3: zeigt eine Wellenabdichtung mit Wälzlager, Dichtelement und Austrittskanal im Längsschnitt.

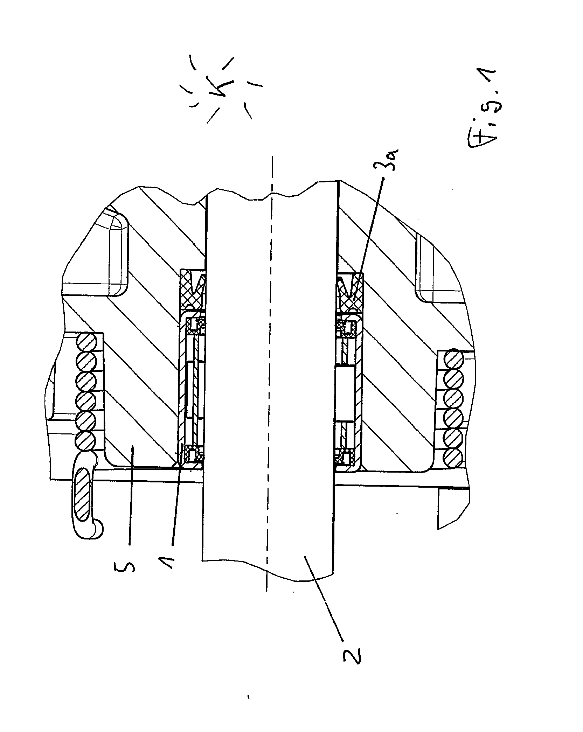

In Fig. 1 ist die Wellenabdichtung für eine Klappenwelle 2 für Ventilklappen von Ventilklappenstutzen im Längsschnitt dargestellt. Die Wellenabdichtung besteht aus einem zwischen der jeweiligen Klappenwelle 2 und dem Ventilklappengehäuse 5 angeordneten Wälzlager 1 und einem zwischen dem Wälzlager 1 und dem inneren Kanal K des Ventilklappenstutzens zwischen der jeweiligen Klappenwelle 2 und dem Ventilklappengehäuse 5 angeordneten Dichtelement 3a. Das Dichtelement 3a ist direkt am Wälzlager 1 anliegend angeordnet, was dazu führt, dass die Wellenabdichtung relativ kompakt baut. Durch die Anordnung der Wellenabdichtung wird in vorteilhafter Weise erreicht, dass aus dem inneren Kanal K des Ventilklappenstutzens keinerlei Kondensat auf die Seite der Wellenabdichtung gelangen kann, die dem inneren Kanal K abgewandt ist. Korrosionsschäden von Bauteilen, die sich an dieser Seite befinden, werden somit in vorteilhafter Weise vollständig vermieden.

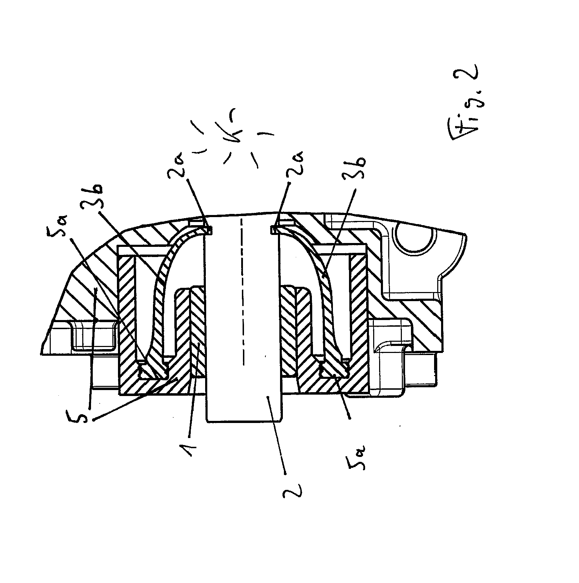

In Fig. 2 ist eine alternative Ausgestaltung der Wellenabdichtung im Längsschnitt dargestellt. Als Dichtelement 3b ist hierbei eine Manschettendichtung angeordnet, die mit der einen Kante in eine erste Nut 5a des Ventilklappengehäuses 5 und mit der anderen Kante in eine zweite Nut 2a der Klappenwelle 2 eingreift. Die Dichtwirkung der Manschettendichtung ist besonders hoch, so dass auch größere Wassermengen, die möglicherweise schubweise im inneren Kanal K des Ventilklappenstutzens anfallen, wirkungsvoll zurückgehalten werden können und nicht zum Wälzlager 1 gelangen.

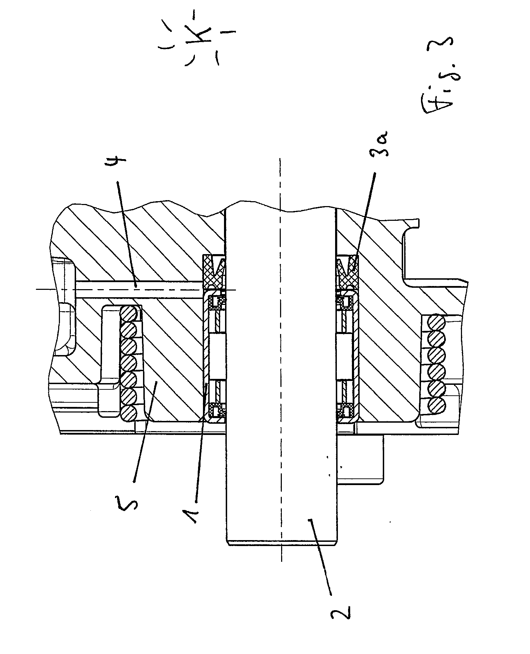

In Fig. 3 ist eine Wellenabdichtung im Längsschnitt dargestellt, bei der im Bereich zwischen dem Wälzlager 1 und dem Dichtelement 3a ein Ende eines Austrittskanals 4 angeordnet ist, der durch das Ventilklappengehäuse 5 zur Umgebung (nicht dargestellt) hin verläuft. Das Ende des Austrittskanals 4 ist sowohl direkt am Wälzlager 1 als auch direkt am Dichtelement 3a positioniert und weist eine Längsachse auf, die senkrecht zur Längsachse der Klappenwelle 2 verläuft. Der Austrittskanal 4 ist an seinem anderen Ende mit der Umgebung verbunden (nicht dargestellt). Über den Austrittskanal 4 können in besonders vorteilhafter Weise schubweise anfallende Kondensatmengen direkt abgeführt und in die Umgebung abgeleitet werden.

## Patentansprüche

1. Wellenabdichtung für Klappenwellen (2) für Ventilklappen von Ventilklappenstutzen, die aus einem zwischen der jeweiligen Klappenwelle (2) und dem Ventilklappengehäuse (5) angeordneten Wälzlager (1) und einem zwischen dem Wälzlager (1) und dem inneren Kanal K des Ventilklappenstutzens zwischen der jeweiligen Klappenwelle (2) und dem Ventilklappengehäuse (5) angeordneten Dichtelement (3a, 3b) besteht.

2. Wellenabdichtung nach Anspruch 1, bei der das Dichtelement (3a, 3b) direkt am Wälzlager (1) anliegend angeordnet ist.

3. Wellenabdichtung nach Anspruch 1 oder Anspruch 2, bei der als Dichtelement (3b) eine Manschettendichtung angeordnet ist, die mit der einen Kante in eine erste Nut (5a) des Ventilklappengehäuses (5) und mit der anderen Kante in eine zweite Nut (2a) der Klappenwelle (2) eingreift.

4. Wellenabdichtung nach einem der Ansprüche 1 bis 3, bei der im Bereich zwischen dem Wälzlager (1) und dem Dichtelement (3a, 3b) ein Ende eines Austrittskanals (4) angeordnet ist, der durch das Ventilklappengehäuse (5) zur Umgebung hin verläuft.

5. Wellenabdichtung nach Anspruch 2 oder Anspruch 4, bei der das Ende des Austrittskanals (4) sowohl direkt am Wälzlager (1) als auch direkt am Dichtelement (3a, 3b) positioniert ist.

6. Verwendung der Wellenabdichtung nach einem der Ansprüche 1 bis 5 als Wellenabdichtung für Ventilklappenwellen für Abgasrückführventile für Kraftfahrzeuge.
